# EUROPÄISCHE PATENTSCHRIFT

(11) **EP 1 002 605 B1**
(45) Veröffentlichungstag und Bekanntmachung des Hinweises auf die Patenterteilung: **03.04.2002**
(21) Anmeldenummer: 99122730.7
(22) Anmeldetag: 16.11.1999
(51) Int. Cl.: B23B 31/117, B23B 31/20

(54) **Reduzierhülse für eine Schrumpfvorrichtung für eine Werkzeugaufnahme**
Reducing sleeve for shrinkage device for tool holder
Douille de réduction pour dispositif de contraction pour porte-outils

(30) Priorität: 19.11.1998 DE 19853298
(43) Veröffentlichungstag der Anmeldung: 24.05.2000
(73) Patentinhaber: HELMUT DIEBOLD GmbH & CO., GOLDRING-WERKZEUGFABRIK, D-72417 Jungingen (DE)
(72) Erfinder: Röss, Richard, 72379 Hechingen-Schlatt (DE)
(74) Vertreter: Leitner, Waldemar, Dr. techn.

(56) Entgegenhaltungen:
- DE-U- 29 705 185

## Beschreibung

Die Erfindung betrifft eine Reduzierhülse für eine Schrumpfvorrichtung für eine Werkzeugaufnahme, die mindestens zwei Segmente aufweist, die relativ zueinander beweglich sind, sowie eine derartige Schrumpfvorrichtung.

Eine derartige Reduzierhülse ist aus dem deutschen Gebrauchsmuster 297 05 185 U1 bekannt. In dieser Druckschrift ist eine Vorrichtung zum Aufheizen eines zu einem Werkzeug-Spannfutter gehörenden Werkzeughalters beschrieben, wobei das Werkzeug-Spannfutter ein in eine Werkzeugmaschine einsetzbares Kupplungsteil und den Werkzeughalter mit einer koaxialen Paßbohrung zur Aufnahme des Schaftes eines auswechselbaren Werkzeugs aufweist. Die eine Heizung zum Aufheizen und Dehnen des Werkzeughalters und seiner Paßbohrung aufweisende Vorrichtung besitzt einen Einsatz mit einer paßgenauen Innenöffnung zur Aufnahme und insbesondere flächigen Berührung der Außenseite des Werkzeughalters, wobei der Einsatz aus einem wärmeleitenden Werkstoff oder Metall besteht und mit der Heizung der Vorrichtung beheizbar ist. Der Einsatz ist in einer Durchmesserebene, in der auch die Mittelachse der Aufnahmeöffnung verläuft, geteilt, so daß die Einzelteile des Einsatzes voneinander trennbar sind. Dies erlaubt es, den Einsatz in noch warmem Zustand von dem erwärmten Werkzeughalter zu trennen, obwohl die beiden Teile (Einsatz und Werkzeughalter) durch die Wärmedehnung des Werkzeughalters zunächst auch eine Art Schrumpfverbindung miteinander eingehen. Diese Trennung der entlang der Durchmesserebene voneinander separierten Einzelteile des Einsatzes erfolgt derart, daß entweder eine Verschwenkung der beiden Einzelteile relativ zueinander oder eine Schiebeführung zum Auseinanderschieben dieser Teile vorgesehen ist. Der bekannte Einsatz ermöglicht es zwar, den Werkzeughalter aus dem Einsatz im noch erwärmtem Zustand zu entnehmen; er besitzt jedoch den Nachteil, daß zur Trennung der beiden Teile des Einsatzes durch ein gegenseitiges Verschwenken ein Gelenk oder Scharnier vorgesehen sein muß, dessen Achse parallel zur Mittelachse der Innenöffnung des Einsatzes verläuft und um welche eines der Teile des Einsatzes und seines ihn aufnehmenden Gehäuses der Vorrichtung relativ zu dem anderen verschwenkbar ist, oder daß zum Trennen der beiden Teile des Einsatzes durch ein Auseinanderschieben eine Schiebeführung jeweils beidseits der Mitte an einander gegenüberliegenden Stellen vorgesehen sein muß, mittels welcher ein Teil des Einsatzes und des zugehörigen Gehäuses relativ zu dem anderen Teil des Einsatzes und des Gehäuses wegverschiebbar ist. Der bekannte Einsatz sowie die dazugehörige Vorrichtung bauen daher relativ aufwendig und kostenungünstig. Desweiteren ist die Wegnahme eines erwärmten Werkzeughalters aus der bekannten Reduzierhülse aufgrund der oben beschriebenen Vorgangsweise relativ zeitaufwendig.

Aus der DE-PS 42 15 607 ist eine Vorrichtung zum Spannen von Werkzeugen in einem Spannfutter bekannt, welches einen Schrumpfabschnitt zur Aufnahme des Werkzeugs aufweist, wobei dem Schrumpfabschnitt eine vorzugsweise als Gasbrenner ausgebildete Heizeinrichtung zugeordnet ist. Das Werkzeug wird im Spannfutter in einer Preßfassung im Schrumpfsitz eingespannt, wodurch sich eine besonders hohe Spannkraft ergibt. Um eine lokale Überhitzung des Spannfutters zu vermeiden und eine vollständige Aufnahme des Werkzeugschaftes in den thermisch ausgeweiteten Schrumpfabschnitt des Spannfutters zu erreichen, ist eine Aufnahmeeinrichtung zur Aufnahme des Werkzeugs vorgesehen, durch welche das Werkzeug zum Spannen in Axialrichtung gegen den Schrumpfabschnitt elastisch beaufschlagbar ist.

Die bekannte Vorrichtung besitzt den Nachteil, daß zum Aufheizen des Werkzeug-Spannfutters dieses relativ zu der Gasflamme gedreht werden muß, wozu in nachteiliger Art und Weise eine aufwendige Drehvorrichtung erforderlich ist. Ein noch gravierender Nachteil ist dadurch gegeben, daß die Aufheizung mittels einer offenen Flamme stattfindet, was in vielen Betrieben unerwünscht ist. Außerdem kann es durch die offene Gasflamme an dem Werkzeughalter zu erheblichen Wärmespannungen und unter Umständen sogar zu einer zu starken Erwärmung kommen, die gegebenenfalls zu Gefügeänderungen im Werkzeughalter führen kann. Eine derartige Überhitzung des Werkzeughalters ist insbesondere bei Werkzeugen, die einen elektronischen Chip aufweisen, gefährlich, da beim Überschreiten einer bestimmten Temperatur dieser Chip durch die auf ihn einwirkende Wärme zerstört wird.

Es ist daher Aufgabe der Erfindung, eine Reduzierhülse der eingangs genannten Art derart weiterzubilden, daß die Entnahme eines erwärmten Werkzeughalters aus der erfindungsgemäßen Reduzierhülse besonders einfach möglich ist.

Diese Aufgabe wird durch die erfindungsgemäße Reduzierhülse dadurch gelöst, daß die mindestens zwei Segmente der Reduzierhülse durch eine elastische Spanneinrichtung derart miteinander verbunden sind, daß die mindestens zwei Segmente während des Erwärmvorgangs der in einem Innenraum der Reduzierhülse aufgenommenen Werkzeugaufnahme gegen die rücktreibende Kraft der Spanneinrichtung auseinanderbeweglich sind.

Durch die erfindungsgemäßen Maßnahmen wird in vorteilhafter Art und Weise erreicht, daß sich die erfindungsgemäße Reduzierhülse zusammen mit dem erwärmten Werkzeughalter ausdehnen kann, so daß - im Gegensatz zu den bekannten Reduzierhülsen - kein Preßsitz zwischen der Reduzierhülse und dem erwärmten Werkzeughalter auftritt. Dies bringt in vorteilhafter Art und Weise mit sich, daß der erwärmte Werkzeughalter besonders einfach aus der Reduzierhülse auch und insbesondere im erwärmten Zustand entnehmbar ist, da die den Werkzeughalter in der Reduzierhülse haltende Kraft im wesentlichen durch die rücktreibende Kraft der elastischen Spanneinrichtung bestimmt wird.

Vorteilhafte Weiterbildungen der Erfindung sind Gegenstand der Unteransprüche.

Weitere Einzelheiten und Vorteile der Erfindung sind dem Ausführungsbeispiel zu entnehmen, das im folgenden anhand der Figuren beschrieben wird. Es zeigen:
- Figur 1: eine schematische Darstellung eines Ausführungsbeispiels einer Schrumpfvorrichtung mit eingesetzter Reduzierhülse,
- Figur 2: eine Ansicht des Ausführungsbeispiels der Figur 1 aus der Richtung II der Figur 1,

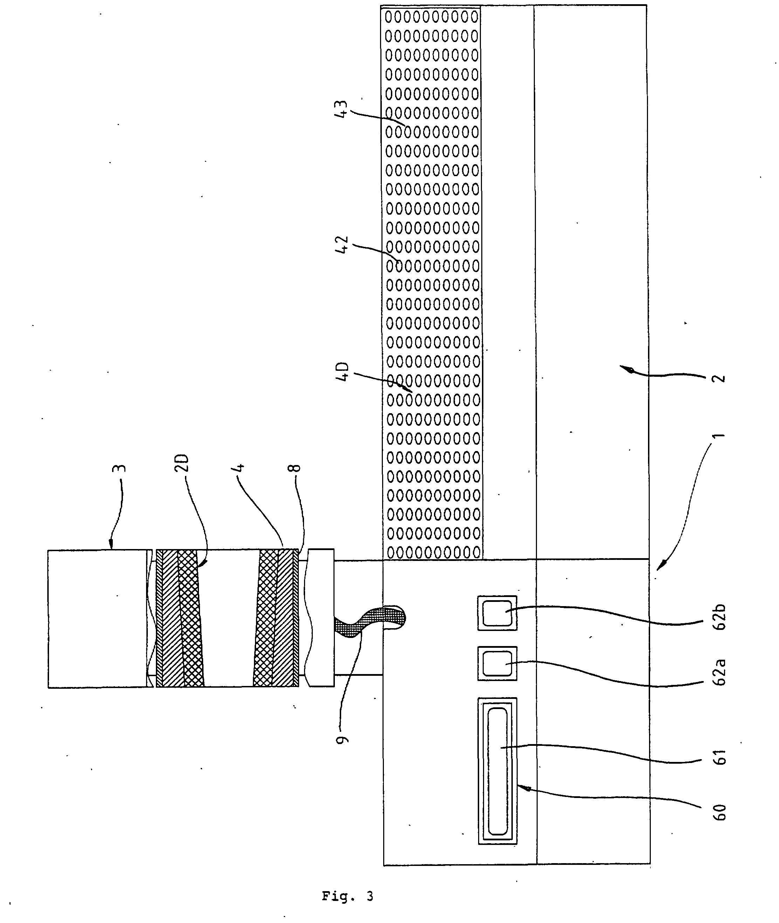

- Figur 3: eine Ansicht des Ausführungsbeispiels aus der Richtung III der Figur 1,
- Figur 4: eine Ausführungsform einer Reduzierhülse,
- Figur 5: ein Schnitt durch die Reduzierhülse entlang der Linie V-V der Figur 4 und
- Figur 6: eine Ansicht der Reduzierhülse aus der Richtung VI der Figur 5.

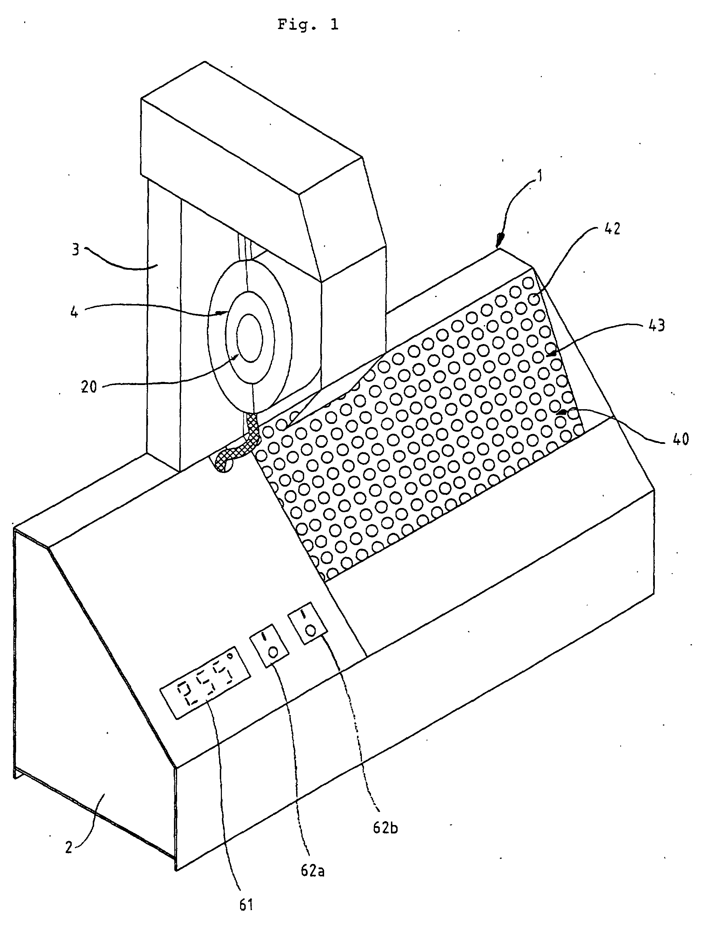

In Figur 1 ist nun ein Ausführungsbeispiel einer Schrumpfvorrichtung 1 dargestellt, welches ein Gehäuse 2 mit einem Galgen 3 aufweist, an dem eine Aufnahme 4 angeordnet ist, in die eine noch weiter unten eingehend beschriebene Reduzierhülse 20 einbringbar ist. Die Aufnahme 4 ist entlang mindestens einer Durchmesserebene D in mindestens zwei Segmente 4a, 4b geteilt, wobei in Figur 1 der Fall einer einzigen Durchmesserebene D, die folglich die Aufnahme 4 in zwei Segmente 4a, 4b teilt, dargestellt ist. Dies schränkt jedoch die Allgemeingültigkeit der nachfolgenden Ausführungen nicht ein, da es dem Fachmann ersichtlich ist, wie er vorzugehen hat, wenn er die Aufnahme 4 in mehr als zwei Segmente 4a, 4b teilen möchte, wie es z. B. dann der Fall wäre, wenn er z. B. eine weitere Teilung der Aufnahme 4 in dann insgesamt vier Segmente vorsehen möchte, wobei dann vorzugsweise die weitere Teilung entlang einer zweiten Durchmesserebene, die orthogonal zu der in Figur 1 in senkrechter Richtung verlaufenden ersten Durchmesserebene D verläuft, gewählt wird.

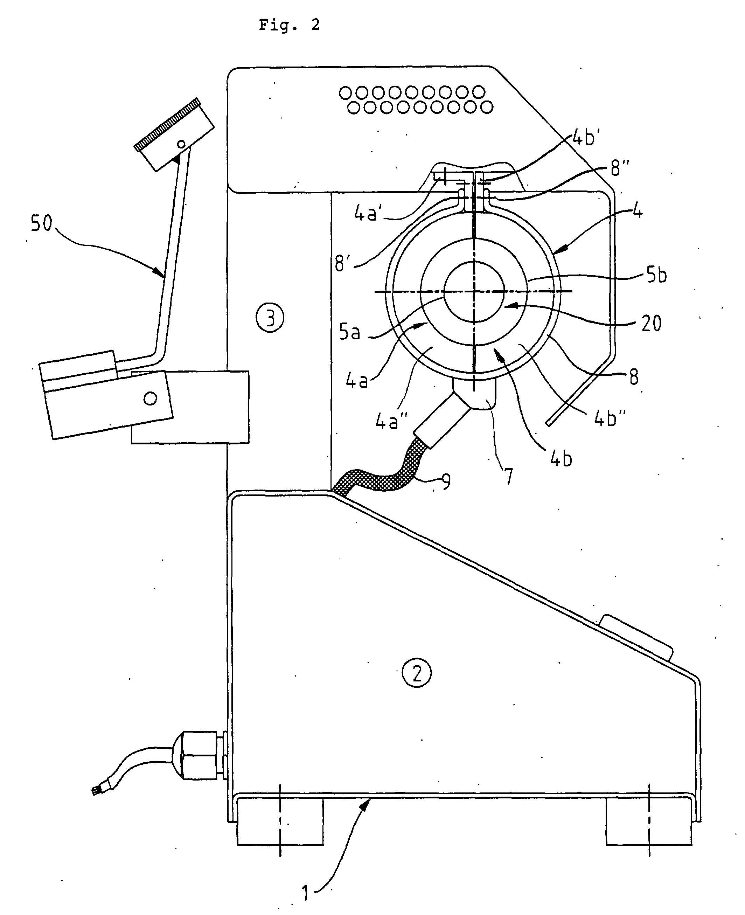

Das in Figur 1 linke Segment 4a der Aufnahme 4 weist ein Halteelement 4a' auf, welches mit dem Galgen 2 fest verbunden ist. Das Halteelement 4a' geht in ein Hülsenelement 4a" über. In entsprechender Art und Weise ist das in Figur 2 rechte Segment 4b der Aufnahme 4 ausgebildet: Ein am ersten Halteelement 4a' befestigtes zweites Halteelement 4b', das in ein zweites Hülsenelement 4b" übergeht, ist zusammen mit dem zweiten Hülsenelement 4b" relativ zum ersten Segment 4a der Aufnahme 4 -insbesondere verschiebar- beweglich

Die Aufnahme 4 weist eine Heizeinrichtung 7 für die in ihren durch die Innenflächen 5a,5b begrenzten Innenraum 6 einsetzbare Reduzierhülse 20 auf. In dem hier beschriebenen Fall wird die Heizeinrichtung 7 durch ein an der Außenfläche 5a',5b' der beiden Segmente 4a,4b anliegendes Heizband 8 ausgebildet, dessen Enden 8',8" jeweils an einem der Halteelemente 4a',4b' der Aufnahme 4 befestigt sind. Das Heizband 8 ist über ein Kabel 9 mit einer im Gehäuse 2 aufgenommenen Energieversorgung (nicht gezeigt) verbunden. Die Heizeinrichtung 7 wird von einer Regeleinrichtung (nicht gezeigt) gesteuert, wobei vorzugsweise eine maximale Temperatur der Heizeinrichtung 7 programmierbar ist.

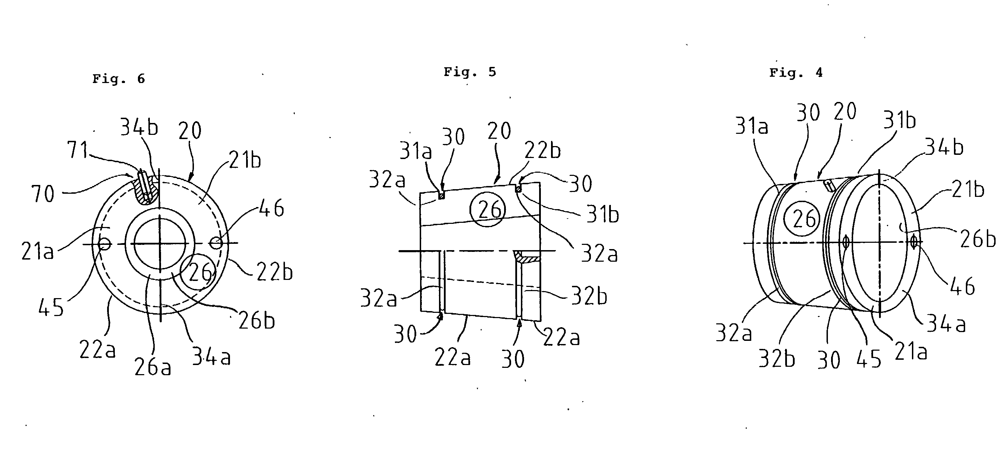

Die in den Innenraum 6 der vorzugsweise aus einem gut wärmeleitenden Material gefertigten Aufnahme 4 einschiebbare Reduzierhülse 20 ist nun näher in den Figuren 4-6 dargestellt. Die vorzugsweise aus gut wärmeleitendem Material gefertigte Reduzierhülse 20 ist -in dem hier beschriebenen Fall- entlang der Durchmesserebene D (siehe Figur 6) in zwei Segmente 21a,21b geteilt, wobei es aber - entsprechend der Aufteilung der Aufnahme 4 in mehrere Segmente - auch hier wiederum möglich ist, vorzusehen, daß die Reduzierhülse 20 aus mehr als zwei Segmenten 21a,21b besteht. Die Außenfläche 22a,22b der beiden Segmente 21a,21b und die Innenfläche 5a,5b der Segment 4a,4b der Aufnahme 4 sind derart aufeinander abgestimmt, daß eine möglichst großflächige Berührung der entsprechenden Flächen 5a,5b und 22a,22b in einem in die die Aufnahme 4 eingesetztem Zustand der Reduzierhülse 20 gegeben ist, so daß ein guter Wärmeübergang von der beheizbaren Aufnahme 4 auf die Reduzierhülse 20 und somit auch auf eine in einem Innenraum der Reduzierhülse 20 aufgenommene Werkzeugaufnahme (nicht gezeigt) gewährleistet ist. Vorzugsweise ist die Reduzierhülse 20 - wie am besten aus Figur 5 ersichtlich ist - mit einer leicht konischen Außenform ausgebildet, so daß beim Einsetzen der Reduzierhülse 20 in den Innenraum 6 der Aufnahme 4 aufgrund der komplementär zur leicht konisch verlaufenden Außenform der Reduzierhülse 20 gestalteten Innenflächen 5a,5b der Segmente 4a,4b eine definierte Positionierung der Reduzierhülse 20 in der Aufnahme 4 erreicht wird. Es ist aber auch eine zylindrische Ausbildung der Reduzierhülse 20 möglich.

Die Innenflächen 26a,26b der Segmente 21a,21b der Reduzierhülse 20 sind wiederum auf die Außenkontur der im Innenraum aufzunehmenden Werkzeugaufnahme derart abgestimmt, daß ein guter Wärmeübergang von der Reduzierhülse 20 auf die Werkzeugaufnahme gegeben ist.

In vorteilhafter Weise ist nun vorgesehen, daß die Reduzierhülse 20 über eine elastisch federnde Spanneinrichtung 30 verfügt, die erlaubt, daß sich die beiden Segmente 21a,21b der Reduzierhülse 20 auseinander bewegen, wenn sich die im Innenraum der Reduzierhülse 20 aufgenommene Werkzeugaufnahme in Folge ihrer Wärmebeaufschlagung ausdehnt. Hierdurch wird vorteilhafter Weise erreicht, daß nunmehr kein Preßsitz zwischen der erwärmten Werkzeugaufnahme und der Reduzierhülse 20 auftritt, so daß die Werkzeugaufnahme leicht im erwärmten Zustand aus der Reduzierhülse 20 entnommen werden kann. Es ist also bei der beschriebenen Reduzierhülse 20 nicht mehr erforderlich, nach Durchführung des Schrumpfvorgangs zum Fixieren eines Werkzeugschaftes in der Werkzeugaufnahme abzuwarten, bis sich die Werkzeugaufnahme etwas abgekühlt hat und damit wieder geschrumpft ist. Hierdurch werden in besonders einfacher Art und Weise kürzere Wechselzeiten erreicht, wobei die gleichmäßige und ohne eine offene Flamme erfolgende Erwärmung des Werkzeug-Spannfutters durch die Heizeinrichtung 7 der Aufnahme 4 bewirkt, daß keine Überhitzung der Werkzeugaufnahme und eines in ihr gegebenenfalls aufgenommenen elektronischen Chips auftreten kann.

Im hier gezeigten Fall ist die elastisch rückfedernde Spanneinrichtung 30 dadurch realisiert, daß in der Außenfläche 22a,22b der die Reduzierhülse 20 ausbildenden Segment 21a,21b zwei umlaufende Nuten 31a,31b eingebracht sind, in denen elastische Spannelemente 32a,32b - wie z.B. ein elastisch dehnbare Streifen aus Metall oder Kunststoff - angeordnet sind. Es bedarf keiner weiteren Erwähnung, daß es natürlich auch möglich ist, an Stelle der beiden Nuten 31a,31b nur eine einzige Nut oder mehr als zwei Nuten 31a,31b, jeweils mit den entsprechenden Spannelementen 32a,32b vorzusehen.

In dem hier gezeigten Fall sind die Spannelemente 32a,32b umlaufend ausgeführt. Es ist aber auch möglich, die Spannelemente 32a,32b derart auszuführen, daß sie nicht um den gesamten Umfang der Segmente 21a,21b der Reduzierhülse 20 laufen, sondern daß sie nur jeweils die Trennstellen 34a,34b der Reduzierhülse 20 überspannen.

In vorteilhafter Weise ist vorgesehen, daß die Aufnahme 4 derart angeordnet ist, daß die Reduzierhülse 20 in die Aufnahme 4 in einer im wesentlichen waagrechten Richtung einschiebar ist. Diese Maßnahme besitzt den Vorteil, daß hierdurch eine besonders einfache Handhabung gewährleistet ist. Ein weitere Vorteil besteht darin, daß auf diese Art und Weise besonders einfach eine aus Figur 2 ersichtliche Meßvorrichtung 50 für die Längseinstellung des Werkzeugsschaftes vorsehbar ist.

Um eine Arretierung der Reduzierhülse 20 in der Aufnahme 4 zu ermöglichen, ist vorgesehen, daß die Reduzierhülse 20 ein Arretierelement 71 einer Arretiereinrichtung 70 aufweist, welches mit einem in den Figuren nicht gezeigten Arretierelement der Aufnahme 4, welches den geräteseitigen Teil der Arretiereinrichtung 70 ausbildet, zusammenwirkt. Im hier gezeigten Fall ist das Arretierelement 71 als ein aus der Außenfläche 22a der Reduzierhülse 20 hervortretender Stift ausgebildet, welcher in eine in axialer Richtung verlaufende, L-förmige Nut (nicht gezeigt) der Aufnahme 4 einschiebbar und durch eine Drehung nach der Art eines Bajonetts verriegelbar ist.

Die Vorrichtung weist desweiteren eine Ablagestation 40 (siehe Figur 1 und 2) auf, in der die aus der Reduzierhülse 20 entnommene Werkzeugaufnahme und/oder die Reduzierhülse 20 selbst abkühlbar ist. Hierzu ist vorgesehen, daß das Gehäuse 2 einen mit Öffnungen 42 versehenen Bereich 43 aufweist, unter dem ein Gebläse (nicht gezeigt) angeordnet ist.

Es kann aber auch vorgesehen sein, daß anstelle der Öffnungen 42 oder zusätzlich zu diesen die Ablagestation 40 mindestens ein röhrenförmiges Aufnahmeelement (nicht gezeigt) aufweist, in welches die Reduzierhülse 20 und/oder die Werkzeugaufnahme zum Abkühlen einsetzbar ist, und zwar vorzugsweise derart, daß im eingesetzten Zustand die Reduzierhülse 20 und/oder die Werkzeugaufnahme unter der Oberfläche der Ablagestation 40 liegt, so daß auch in dem Fall, daß der Benutzer seine Hand auf die Ablagestation 40 legt, diese nicht mit der erwärmte Reduzierhülse 20 und/oder der Werkzeugaufnahme in Berührung kommen kann. Eine derartige Ausgestaltung ist aus sicherheitstechnischen Aspekten vorteilhaft.

Um die Reduzierhülse 20 aus der Aufnahme 4 und/oder aus den vorgenannten Aufnahmeelementen der Ablagestation 40 leicht entnehmen zu können, ist vorgesehen, daß diese an ihrer Frontfläche Bohrungen 45, 46 aufweist, in die zum Entnehmen der Reduzierhülse 20 mit einer entsprechend geformten Zange eingegriffen werden kann.

Die Vorrichtung 1 weist desweiteren eine Anzeigeeinrichtung 60 mit einer Anzeige 61 und Wähltasten 62a,62b auf, wobei die durch die Wähltasten 62a,62b vorwählbare Temperatur und die Dauer der Temperaturbeaufschlagung auf der Anzeige 61 darstellbar sind.

Zusammenfassend ist festzustellen, daß durch die beschriebene Reduzierhülse 20 und die sie verwendende Vorrichtung 1 in vorteilhafter Weise ein einfaches Entnehmen von erwärmten Werkzeugen aus der Reduzierhülse 20 ermöglicht wird, indem vorgesehen ist, daß die Reduzierhülse 20 aus mindestens zwei Segmenten 21a,21b besteht, die gegeneinander beweglich und durch eine elastische Spanneinrichtung 30 gehalten sind.

## Patentansprüche

1. Reduzierhülse für eine Schrumpfvorrichtung (1) für eine Werkzeugaufnahme, die mindestens zwei Segmente (21a,21b) aufweist, die relativ zueinander beweglich sind, **dadurch gekennzeichnet, daß** die mindestens zwei Segmente (21a,21b) der Reduzierhülse (20) durch eine elastische Spanneinrichtung (30) derart miteinander verbunden sind, daß die mindestens zwei Segmente (21a,21b) während des Erwärmvorgangs der in einem Innenraum der Reduzierhülse (20) aufgenommenen Werkzeugaufnahme gegen die rücktreiben' de Kraft der Spanneinrichtung (30) auseinanderbeweglich sind.

2. Reduzierhülse nach Anspruch 1, **dadurch gekennzeichnet, daß** die Spanneinrichtung (30) mindestens ein Spannelement (32a,32b) aufweist, welches mindestens zwei Segmente (21 a,21 b) der Reduzierhülse (20) beaufschlägt.

3. Reduzierhülse nach Anspruch 2, **dadurch gekennzeichnet, daß** mindestens ein Spannelement (32a,32b) der Spanneinrichtung (30) der Reduzierhülse (20) in periphärer Richtung der Reduzierhülse (20) zumindest über einen Teilbereich derselben umlaufend ausgebildet ist.

4. Reduzierhülse nach einem der vorangehenden Ansprüche, **dadurch gekennzeichnet, daß** das mindestens eine Spannelement (32a,32b) der Spanneinrichtung (30) der Reduzierhülse (20) in einer in einer Außenfläche (22a,22b) der Reduzierhülse (20) eingebrachten Nut (31a,31b) aufgenommen ist.

5. Reduzierhülse nach einem der vorangehenden Ansprüche, **dadurch gekennzeichnet, daß** die Reduzierhülse (20) zwei Nuten (31a,31b) aufweist, die jeweils an gegenüberliegenden Enden der Reduzierhülse (20) angeordnet sind.

6. Reduzierhülse nach einem der vorangehenden Ansprüche, **dadurch gekennzeichnet, daß** die Außenkontur der Reduzierhülse (20) einen konischen Verlauf aufweist.

7. Reduzierhülse nach einem der vorangehenden Ansprüche, **dadurch gekennzeichnet, daß** den Innenraum (26) der Reduzierhülse (20) begrenzende Innenflächen (26a,26b) der Segmente (21a,21b) der Reduzierhülse (20) in axialer Richtung einen konischen oder einen zylindrischen Verlauf aufweisen.

8. Reduzierhülse nach einem der vorangehenden Ansprüche, **dadurch gekennzeichnet, daß** die Reduzierhülse (20) aus einem gut wärmeleitendem Material gefertigt ist.

9. Reduzierhülse nach einem der vorangehenden Ansprüche, **dadurch gekennzeichnet, daß** die mindestens zwei Segmente (21a,21b) der Reduzierhülse (20) durch entsprechende Trennstellen (34a,34b) voneinander getrennt sind.

10. Reduzierhülse nach einem der vorangehenden Ansprüche, **dadurch gekennzeichnet, daß** die Reduzierhülse (20) ein Arretierelement (71) einer Arretiereinrichtung (70) aufweist, durch das sie in einer Aufnahme (4) lösbar arretierbar ist.

11. Reduzierhülse nach einem der vorangehenden Ansprüche, **dadurch gekennzeichnet, daß** die Reduzierhülse (20) an ihrer Frontfläche mindestens eine Bohrung (45, 46) zum Entnehmen der Reduzierhülse (20) aufweist.

12. Schrumpfvorrichtung für eine Werkzeugaufnahme, **dadurch gekennzeichnet, daß** in eine Aufnahme (4) der Schrumpfvorrichtung (1) eine Reduzierhülse (20) nach einem der Ansprüche 1 - 11 eingesetzt ist.

13. Schrumpfvorrichtung nach Anspruch 12, **dadurch gekennzeichnet, daß** die Aufnahme (4) für die Reduzierhülse (20) mindestens zwei Segmente (4a,4b) aufweist, die gegeneinander beweglich angeordnet sind.

14. Schrumpfvorrichtung nach einem der Ansprüche 12 oder 13, **dadurch gekennzeichnet, daß** die Aufnahme (4) für die Reduzierhülse (20) eine Heizeinrichtung (7) aufweist, durch welche die Segmente (4a,4b) der Aufnahme (4) erwärmbar sind.

15. Schrumfvorrichtung nach Anspruch 14, **dadurch gekennzeichnet, daß** die Heizeinrichtung (7) ein die Segmente (4a,4b) umgebendes Heizband (8) aufweist.

16. Schrumpfvorrichtung nach einem der Ansprüche 12 bis 15, **dadurch gekennzeichnet, daß** die Aufnahme (4) derart in der Schrumpfvorrichtung (1) angeordnet ist, daß die Reduzierhülse (20) in einer im wesentlichen waagrechten Richtung in die Aufnahme (4) einschiebbar ist.

17. Schrumpfvorrichtung nach einem der Ansprüche 12 bis 16, **dadurch gekennzeichnet, daß** in der Aufnahme (4) die Reduzierhülse (20) lösbar arretierbar ist.

18. Schrumpfvorrichtung nach einem der Ansprüche 12 bis 17, **dadurch gekennzeichnet, daß** die Schrumpfvorrichtung (1) eine Längenmeßvorrichtung (50) aufweist.

19. Schrumpfvorrichtung nach einem der Ansprüche 12 bis 18, **dadurch gekennzeichnet, daß** die Schrumpfvorrichtung (1) eine Ablagestation (40) aufweist, in der die aus der Reduzierhülse (20) entnommene Werkzeugaufnahme und/oder die Reduzierhülse (20) abkühlbar ist.

20. Schrumpfvorrichtung nach Anspruch 19, **dadurch gekennzeichnet, daß** die Ablagestation (40) durch einen mit Öffnungen (42) versehenen Bereich (43) des Gehäuses (2), unter dem ein Gebläse angeordnet ist, ausgebildet ist.

21. Schrumpfvorrichtung nach Anspruch 19, **dadurch gekennzeichnet, daß** die Ablagestation (40) mindestens ein Aufnahmeelement aufweist, in welches die Reduzierhülse (20) und/oder die der Reduzierhülse (20) entnommene Werkzeugaufnahme einsetzbar ist.

22. Schrumpfvorrichtung nach einem der Ansprüche 12 bis 21, **dadurch gekennzeichnet, daß** die Schrumpfvorrichtung (1) eine Anzeigeeinrichtung (60) mit einer Anzeige (61) und Wähltasten (62a,62b) aufweist, wobei durch die Wähltaste (62a,62b) die Temperatur und/oder die Dauer der Temperaturbeaufschlagung der Reduzierhülse (20) vorwählbar sind.

## Claims

1. Reducing sleeve for a shrinkage device (1) for a tool holder, having at least two segments (21a, 21b) which are movable relative to each other, **characterised in that** the at least two segments (21a, 21b) of the reducing sleeve (20) are joined together by an elastic clamping fixture (30) in such a way that the at least two segments (21a, 21b) can, during the heating of the tool holder held in an interior of the reducing sleeve (20), be moved apart against the repelling force of the clamping fixture (30).

2. Reducing sleeve as claimed in Claim 1, **characterised in that** the clamping fixture (30) has at least one clamping element (32a, 32b) which acts upon at least two segments (21a 21b) of the reducing sleeve (20).

3. Reducing sleeve as claimed in Claim 2, **characterised in that** at least one clamping element (32a, 32b) of the clamping fixture (30) of the reducing sleeve (20) in the peripheral direction of the reducing sleeve (20) is designed as circumferential, at least over a portion thereof.

4. Reducing sleeve as claimed in any one of the preceding claims, **characterised in that** the at least one clamping element (32a, 32b) of the clamping fixture (30) of the reducing sleeve (20) is held in a groove (31a, 31b) made in an outer face (22a, 22b) of the reducing sleeve (20).

5. Reducing sleeve as claimed in any one of the preceding claims, **characterised in that** the reducing sleeve (20) has two grooves (31a, 31b) each located at opposite ends of the reducing sleeve (20).

6. Reducing sleeve as claimed in any one of the preceding claims, **characterised in that** the outer contour of the reducing sleeve (20) is conical in shape.

7. Reducing sleeve as claimed in any one of the preceding claims, **characterised in that** the inner faces (26a, 26b) of the segments (21a, 21b) of the reducing sleeve (20) which bound the interior (26) of the reducing sleeve (20) are conical or cylindrical in shape in the axial direction.

8. Reducing sleeve as claimed in any one of the preceding claims, **characterised in that** the reducing sleeve (20) is made of a material having good heat conductivity.

9. Reducing sleeve as claimed in any one of the preceding claims, **characterised in that** the at least two segments (21a, 21b) of the reducing sleeve (20) are separated from each other by corresponding separating points (34a, 34b).

10. Reducing sleeve as claimed in any one of the preceding claims, **characterised in that** the reducing sleeve (20) has a locking element (71) of a locking device (70), by means of which it is detachably lockable in a holder (4).

11. Reducing sleeve as claimed in any one of the preceding claims, **characterised in that** the reducing sleeve (20) has on its front face at least one bore (45, 46) for removal of the reducing sleeve (20).

12. Shrinkage device for a tool holder, **characterised in that** a reducing sleeve (20) as claimed in any one of Claims 1 - 11 is inserted in a holder (4) of the shrinkage device (1).

13. Shrinkage device as claimed in Claim 12, **characterised in that** the holder (4) for the reducing sleeve (20) has at least two segments (4a, 4b) located such that they are movable in opposite directions relative to each other.

14. Shrinkage device as claimed in any one of Claims 12 or 13, **characterised in that** the holder (4) for the reducing sleeve (20) has a heating facility (7) which enables the segments (4a, 4b) of the holder (4) to be heated.

15. Shrinkage device as claimed in Claim 14, **characterised in that** the heating facility (7) has a heating strip (8) surrounding the segments (4a, 4b).

16. Shrinkage device as claimed in any one of Claims 12 to 15, **characterised in that** the holder (4) is arranged in the shrinkage device (1) in such a way that the reducing sleeve (20) is insertable in the holder (4) in a substantially horizontal direction.

17. Shrinkage device as claimed in any one of Claims 12 to 16, **characterised in that** the reducing sleeve (20) is detachably lockable in the holder (4).

18. Shrinkage device as claimed in any one of Claims 12 to 17, **characterised in that** the shrinkage device (1) includes a length meter (50).

19. Shrinkage device as claimed in any one of Claims 12 to 18, **characterised in that** the shrinkage device (20) has a receiving station (40) in which the tool holder removed from the reducing sleeve (20) and/or the reducing sleeve (20) can be cooled down.

20. Shrinkage device as claimed in Claim 19, **characterised in that** the receiving station (40) is formed by an area (43) of the casing (2) which is provided with orifices (42), under which area a fan is located.

21. Shrinkage device as claimed in Claim 19, **characterised in that** the receiving station (40) has at least one holding element into which the reducing sleeve (20) and/or the tool holder removed from the reducing sleeve (20) may be inserted.

22. Shrinkage device as claimed in any one of Claims 12 to 21, **characterised in that** the shrinkage device (1) has a display facility (60) with a display (61) and selector keys (62a, 62b), wherein the selector key (62a, 62b) enables the temperature and/or the duration of the application of heat to the reducing sleeve (20) to be preselected.

## Revendications

1. Douille de réduction pour un dispositif de retrait (1) pour un logement d'outil, qui présente au moins deux segments (21a, 21b) qui sont mobiles l'un par rapport à l'autre, **caractérisée en ce que** les segments (21a, 21b) de la douille de réduction (20), au moins au nombre de deux, sont reliés l'un à l'autre par un dispositif de serrage élastique (30) de telle sorte que les segments (21a, 21b), au moins au nombre de deux, au cours du processus de réchauffement du logement d'outil disposé dans l'espace interne de la douille de réduction (20), sont à même de s'écarter l'un de l'autre à l'encontre de la force de rétropropulsion exercée par le dispositif de serrage (30).

2. Douille de réduction selon la revendication 1, **caractérisé en ce que** le dispositif de serrage (30) présente au moins un élément de serrage (32a, 32b) qui agit sur au moins deux segments (21a, 21b) de la douille de réduction (20).

3. Douille de réduction selon la revendication 2, **caractérisée en ce qu'**au moins un élément de serrage (32a, 32b) du dispositif de serrage (30) de la douille de réduction (20), est réalisé, dans la direction périphérique de la douille de réduction (20), de façon à entourer cette dernière au moins sur une zone partielle.

4. Douille de réduction selon l'une quelconque des revendications précédentes, **caractérisée en ce qu'**au moins un élément de serrage (32a, 32b) du dispositif de serrage (30) de la douille de réduction (20) vient se loger dans une rainure (31a, 31b) pratiquée dans la surface externe (22a, 22b) de la douille de réduction (20).

5. Douille de réduction selon l'une quelconque des revendications précédentes, **caractérisée en ce que** la douille de réduction (20) présente deux rainures (31a, 31b) qui sont disposées respectivement aux extrémités opposées de la douille de réduction (20).

6. Douille de réduction selon l'une quelconque des revendications précédentes, **caractérisée en ce que** le contour externe de la douille de réduction (20) présente une allure conique.

7. Douille de réduction selon l'une quelconque des revendications précédentes, **caractérisée en ce que** les surfaces internes (26a, 26b) des segments (21a, 21b) de la douille de réduction (20) délimitant l'espace interne (26) de la douille de réduction (20) présentent, en direction axiale, une allure conique ou une allure cylindrique.

8. Douille de réduction selon l'une quelconque des revendications précédentes, **caractérisée en ce que** la douille de réduction (20) est réalisée en une matière bonne conductrice de chaleur.

9. Douille de réduction selon l'une quelconque des revendications précédentes, **caractérisée en ce que** les segments (21a, 21b) de la douille de réduction (20), au moins au nombre de deux, sont séparés l'un de l'autre par des endroits de séparation correspondants (34a, 34b).

10. Douille de réduction selon l'une quelconque des revendications précédentes, **caractérisée en ce que** la douille de réduction (20) présente un élément d'arrêt (71) d'un dispositif d'arrêt (70), par lequel elle peut être bloquée de manière amovible dans un logement (4).

11. Douille de réduction selon l'une quelconque des revendications précédentes, **caractérisée en ce que** la douille de réduction (20) présente, sur sa surface frontale, au moins un alésage (45, 46) pour le retrait de la douille de réduction (20).

12. Dispositif de retrait pour un logement d'outil, **caractérisé en ce qu'**une douille de réduction (20) selon l'une quelconque des revendications 1 à 11 est insérée dans un logement (4) du dispositif de retrait (1).

13. Dispositif de retrait selon la revendication 12, **caractérisé en ce que** le logement (4) pour la douille de réduction (20) présente au moins deux segments (4a, 4b) qui sont disposés en mobilité l'un par rapport à l'autre.

14. Dispositif de retrait selon l'une quelconque des revendications 12 ou 13, **caractérisé en ce que** le logement (4) pour la douille de réduction (20) présente un dispositif de chauffage (7) par lequel on peut chauffer les segments (4a, 4b) du logement (4).

15. Dispositif de retrait selon la revendication 14, **caractérisé en ce que** le dispositif de chauffage (7) présente un ruban de chauffage (8) entourant les segments (4a, 4b).

16. Dispositif de retrait selon l'une quelconque des revendications 12 à 15, **caractérisé en ce que** le logement (4) est disposé dans le dispositif de retrait (1) de telle sorte que la douille de réduction (20) est à même de venir s'insérer dans le logement (4) en direction essentiellement horizontale.

17. Dispositif de retrait selon l'une quelconque des revendications 12 à 16, **caractérisé en ce que** la douille de réduction (20) peut être bloquée de manière amovible dans le logement (4).

18. Dispositif de retrait selon l'une quelconque des revendications 12 à 17, **caractérisé en ce que** le dispositif de retrait (1) présente un dispositif de mesure de la longueur (50).

19. Dispositif de retrait selon l'une quelconque des revendications 12 à 18, **caractérisé en ce que** le dispositif de retrait (1) présente un poste de dépôt (40) dans lequel le logement d'outil retiré de la douille de réduction (20) et/ou la douille de réduction (20) peuvent être refroidis.

20. Dispositif de retrait selon la revendication 19, **caractérisé en ce que** le poste de dépôt (40) est réalisé à l'aide d'une zone (43) du boîtier (2) munie d'ouvertures (42), en dessous de laquelle est disposé un ventilateur.

21. Dispositif de retrait selon la revendication 19, **caractérisé en ce que** le poste de dépôt (40) présente au moins un élément de réception dans lequel la douille de réduction (20) et/ou le logement d'outil retiré de la douille de réduction (20) peuvent venir s'insérer.

22. Dispositif de retrait selon l'une quelconque des revendications 12 à 21, **caractérisé en ce que** le dispositif de retrait (1) présente un dispositif d'affichage (60) comprenant un affichage (61) et des touches de sélection (62a, 62b), la température et/ou la durée de l'exposition de la douille de réduction (20) à la température pouvant être présélectionnées via des touches de sélection (62a, 62b).
